# EUROPEAN PATENT APPLICATION

(11) **EP 2 837 931 A1**
(43) Date of publication of application: **18.02.2015**
(21) Application number: 13004077.7
(22) Date of filing: 16.08.2013
(51) Int. Cl.: G01N 27/12

(54) **Method of manufacturing an integrated metal oxide gas sensor**

(71) Applicant: Sensirion AG, 8712 Stäfa (CH)
(72) Inventor: Mücke, Ulrich, 8037 Zürich (CH); Mayer, Felix, 8712 Stäfa (CH)
(74) Representative: Mirza, Akram Karim

(57) **Abstract**

A method for manufacturing gas sensors with a metal oxide layer as sensitive layer is described using the steps of providing a substrate and sensitive and/or electrode material and building a sensitive structure and/or an electrode contacting the sensitive structure by contactless dispensing the sensitive and/or electrode material onto the substrate through a capillary, wherein the contactless dispensing step includes an additional focussing step after the sensitive material has exited the capillary by generating an electrical force field or a fluid-dynamic force field at a location between the capillary and the substrate, thus generating structures of a characteristic length in the range of 30 microns to 10 nm.

## Description

### FIELD OF THE INVENTION

The present invention relates to a gas sensor and a method of manufacturing an integrated gas sensor, particularly a metal oxide gas sensor.

### BACKGROUND OF THE INVENTION

Portable or mobile devices originally introduced as mobile phones or electronic agendas become more and more ubiquitous. As the processing power of their internal processors grows and equally the bandwidth for communication with stationary processors, such portable devices take on more and more the role of multi-purpose tools available to consumers and specialist users alike.

It has been recognized that portable devices can benefit from the presence of sensors capable of providing a chemical analysis of materials brought into contact or the vicinity of the device. Whilst there are many possible applications for such sensors, it suffices to consider for example the analysis of air surrounding the portable device. Such an analysis can be useful for multiple purposes such as testing for hazardous gases, breath analysis for general medical purposes or driving fitness, and the like.

However integrating such a sensor within the narrow confines of a modern day portable device poses a significant technical challenge. Typically for such devices only a very limited volume is available for additional sensors outside the core functionality of the device such as wireless voice or data communication, display, speaker, processors and battery. This means that the real overall dimensions of the sensor as well as its associated circuitry for control and readout have to be as small as possible.

It is further known to use high-temperature chemoresistors with a semiconducting metal oxide (MOX) as sensitive material as sensors. Typically a layer of the sensitive material is deposited onto a pair of metal electrodes. When used as a gas sensor, the gaseous species reacts with adsorbed oxygen on the MOX surface, which acts as an electron donor or acceptor. The related change in conductivity across the layer is measured and analyzed to determine the species and/or its concentration.

A sensor with small outer dimensions can only be manufactured if the active structures, i.e. the size of the metal oxide film between electrodes, are equally reduced in size. It is therefore seen as an object of the invention to provide novel methods of manufacturing chemical sensors using metal oxide films contacted through metallic electrodes, particularly for very small devices.

### SUMMARY OF THE INVENTION

Hence, according to a first aspect of the invention, there is provided a method for manufacturing a chemical sensor. According to this method, a substrate and sensitive and/or electrode material is provided and a sensitive structure and/or an electrode contacting the sensitive structure is built by contactless dispensing the sensitive and/or electrode material onto the substrate through a capillary, wherein the contactless dispensing includes an additional step of having an electric or fluid-dynamic force field within the gap between capillary and the substrate to assist in the deposition of the material and the structure is built by moving the capillary relatively to the substrate.

Typically the capillary dispenses of the material in droplet form or as aerosol forming deposits at the location where the material impinge upon the surface of the substrate.

The step of generating an electric force field can include the step of applying a static or alternating electric field to the charged sensitive or electrode material (electrohydrodynamic) or uncharged but polarize-able sensitive or electrode material(dielectrophoresis) between the capillary and the substrate. The step of generating a fluid-dynamic force field can include the step of streaming or jetting an additional fluid surrounding the sensitive or electrode material during the deposition (aerosol).

The characteristic length of the structures of the sensitive layer or electrodes is preferably in the range from 30 microns to 10 nm or even in the range of 25 microns to 10 nm.

The method is preferably applied to manufacturing line or area structures by depositing overlapping deposits. I

The sensitive material is preferably a metal oxide dispersed in fluid material. It can be tin oxide, tungsten oxide, gallium oxide, indium oxide, zinc oxide or mixures thereof in doped and non-intentionally doped form. The electrode material is preferably selected from the group of noble metals or from mixtures thereof.

The capillary is preferably part of a jet printing tool providing additional reservoirs of sensitive material to sustain manufacturing of a large number of sensitive layers on a substrate such as a wafer.

Another aspect of the invention relates to a gas sensor using metal oxide layers contacted by electrodes wherein the length of either an electrode or the metal oxide layer are in the range from 30 microns to 10 nm or even in the range of 25 microns to 10 nm. The electrodes or layers are preferably composed of overlapping deposits.

The sensor is best integrated with CMOS circuitry for control and read-out onto a common substrate.

The above and other aspects of the present invention together with further advantageous embodiments and applications of the invention are described in further details in the following description and figures.

### BRIEF DESCRIPTION OF THE FIGURES

FIGs. 1A and 1B are a schematic perspective view and a cross-section, respectively, of a metal oxide gas sensor;
FIG. 1C is a schematic perspective view of another metal oxide gas sensor;
FIGs. 2A and 2B illustrate steps of manufacturing a gas sensor in accordance with an example of the invention; and
FIG. 3 illustrates an alternative method of manufacturing a gas sensor in accordance with an example of the invention.

### DETAILED DESCRIPTION

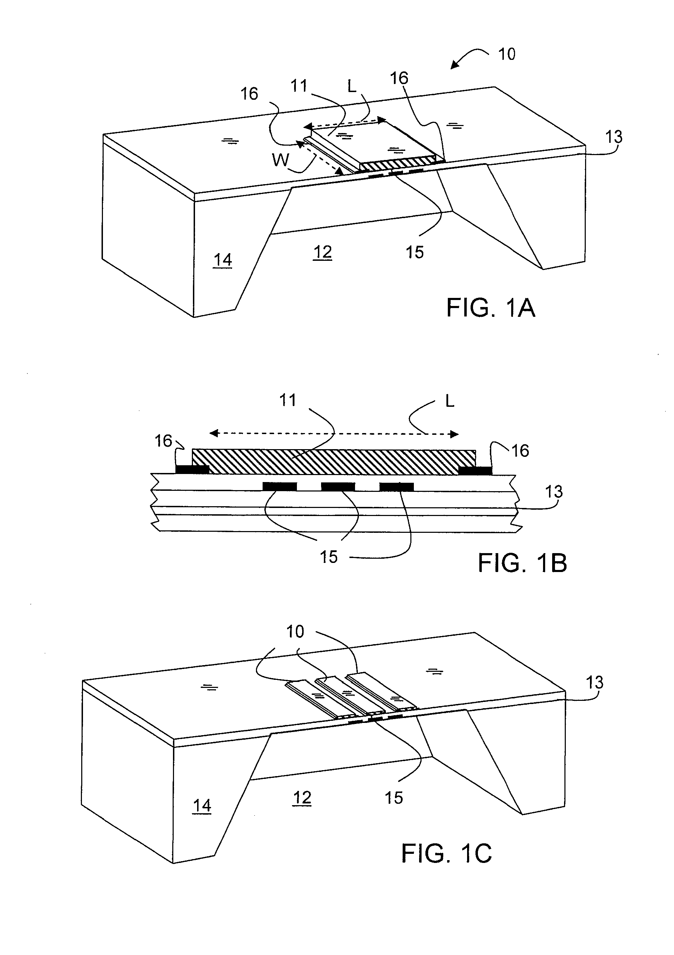

A gas sensor 10 with a sensing layer 11 of metal oxide is shown in FIGs. 1A and 1B. The sensor is integrated with a CMOS circuitry (not shown) on a single chip. Parts of the CMOS layers 13 and handle layer 14 required for the CMOS circuit are etched away in a micromechanic (MEMS) or microstructuring step to form a cavity 12 at the location of the sensor. The remaining layers 13 form a thin membrane to support the actual sensor 10.

Embedded within the layers 13 are conducting elements forming a heater 15 to provide a local source of heat to heat the metal oxide 11 during operation of the sensor.

The metal oxide layer 11 is contacted by two conductive electrodes 16 and hence acts as a resistor. In the presence of an analyte this resistance changes thereby providing a measure of the concentration of the analyte in the immediate vicinity of the metal oxide layer.

The size or dimension which is of importance for this aspect of the invention is the length L of the sensor, which is the lateral extension of the metal oxide layer between the electrodes. Of equal importance is the length of the electrodes, i.e. the sensors lateral dimension in direction of the neighboring electrode or electrode finger. In FIG. 1 the dimension orthogonal to the length L is referred to as width W of the sensing layer or electrode.

For the purpose of the present invention, these dimensions are referred to as characteristic as they challenge the manufacturing process for metal oxide gas sensor. For known sensors, the characteristic lengths are typically in the order of 100 microns or more. In order to provide a higher integration and sensitivity within for example the limited confines and voltage supply of a portable electronic device such as a mobile phone, the characteristic lengths are advantageously reduced. Reducing the characteristic sizes of a sensor allows to manufacture smaller integrated sensors but also to place more sensor cells onto the same area as indicated in FIG. 1C, where three gas sensors 10 are placed for example above the same heating circuit 15, which is used in FIGs. 1A and 1B to operate one sensor. Each of the three gas sensors 10 can be made of the same or of a different material.

In these figures as in the ones following identical numerals are used to denote identical or similar features in the different embodiments.

To manufacture sensors with characteristic lengths as desired, an assisted jet printing method can be used.

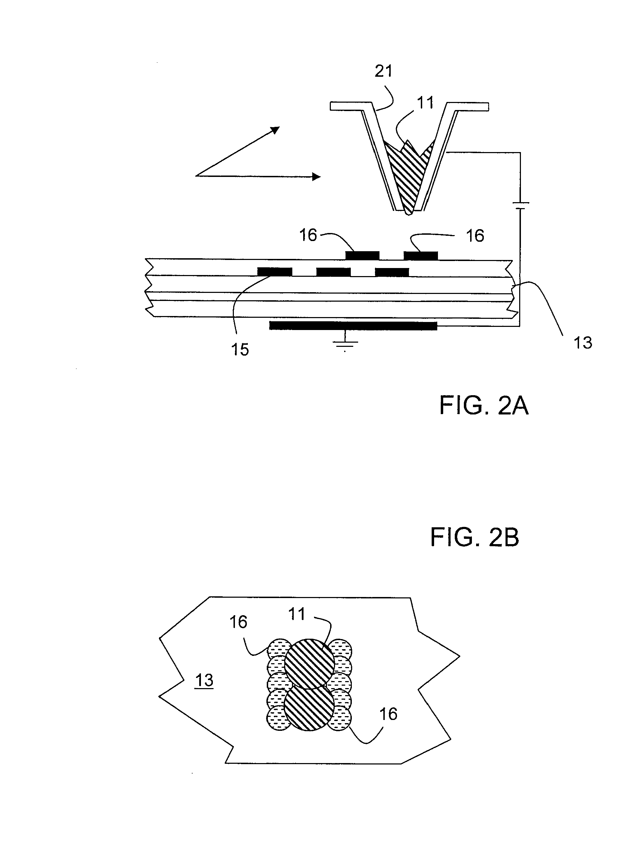

Methods of manufacturing the sensor structures represented by FIGs. 1A - 1C are illustrated in FIGs. 2A and 2B. In FIG. 2A a method is employed as described for example by N.C. Schirmer et al. in: "On Ejecting Colloids Against Capillarity from Submicrometer Openings: On-Demand Dielectrophoretic Nanoprinting", Adv. Mater. 2010, 22, 4701-4705. The method uses a capillary with a metalized nozzle 21. The nozzle 21 is connected to a DC potential of several hundred volts against the grounded substrate. The potential difference generates an electrical field and by pulsing the potential droplets can be ejected from the nozzle in a controlled manner.

In FIG. 2A the nozzle 21 of a print head is shown in position to deposit the sensor or electrode material 11 (or a pre-cursor of it) from a dispersion in suitable solvents on top of the electrodes 16. Line structures to form electrodes and/or the metal oxide film can be deposited by moving the substrate and the nozzle relative to each other and depositing droplets between the movement resulting in a structure comprised of deposits which is schematically depicted in FIG. 2B.

In FIG. 2B the two electrodes 16 are deposited first as two rows of deposits onto the substrate 13. Then two larger deposits of MOX material 11 are deposited between the electrodes 16. The deposition process can require an intermediate drying or annealing process after the deposition of the electrodes 11 and prior to the deposition of the MOX layer 11 or even between the deposition of single deposits. With or without the use of such an intermediate drying or annealing, it is beneficial to use solvents which dissolve the already deposited layer to a lesser degree or not at all in the subsequently deposited materials.

The exact locations and size of the printed structures and the timing of the deposition steps can vary depending on the sensor design and the material used in the process, particularly the properties of the inks.

The material of the electrodes is typically a noble metal or a mixture thereof, for example Pt, Au, Ag, Pd or Ru. The metal-oxide used can be tin oxide, tungsten oxide, gallium oxide, indium oxide, or zinc oxide or mixures thereof in non-intentionally doped and doped form. As already described the sensor can also include a micro electro-mechanical system or MEMS type heat source integrated within the sensor. The sensor can be built integrated with its own CMOS circuitry for control and read-out. The physical dimensions of the substrate including the CMOS circuit and the MEMS sensor are less than 5mm x 5mm making it suitable for integration into a mobile portable device with private or public network connectivity such as mobile phones and the like.

As an alternative to the above methods a superfine ink jet printing system can be used as is commercially available (http://www.sijtechnology.com) and described for example in by K. Murata and K. Masuda in a brochure entitled: "Super Inkjet Printer Technology and Its Properties" CONVERTECH & e-Print July / August 2011, 74-78 and the references cited therein.

Such a system is capable of using droplet volume between 0.1fl (femtoliter) to 10pl (picoliter), and can write line lengths and widths of 0.5µm to several dozen µm. The viscosity range of the inks is in the range of 0.5 to 10,000cps (non-heated). The inks can be selected from a wide range including ink formulations of conductive and non-conductive materials.

The above-described methods can be regarded as methods assisted by an electric field, as an electric field is required to either assist in generating droplets of the required size or in focussing the droplets. The field can be provided as shown in FIG. 2A by connecting the nozzle and the substrate to different potentials. The electric field can also be provided by using electrodes placed in the vicinity of the substrate or the nozzle and connected to the required potential.

However, it can be desirable to generate the structures as described above without the use of an electric field. In such a case the ink jet can be mechanically focused as described in the following, using a fluid-dynamic force field as generated through an additional fluid jet between the location of the nozzle of the capillary and the substrate.

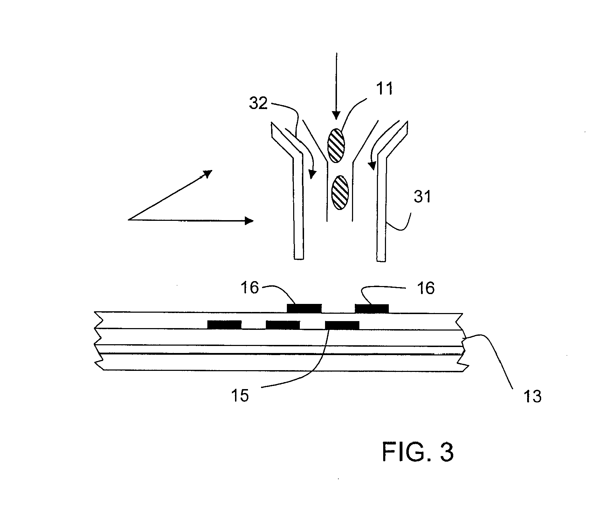

In FIG. 3 a method is employed known per se as aerosol jet printing as described for example in the United States patent no. 4019188. The aerosol jet process begins with the atomization of a print material, e.g. the MOX material 11 in a suitable fluid, using typically ultra sound to produce droplets in the order of one to two microns in diameter. These atomized femtoliter size droplets 11 of MOX Material or a precursor solution of the MOX material are entrained in a gas stream and delivered to the nozzle 31. Here a second gas 32 is introduced around the aerosol stream to focus the droplets 11 into a tightly collimated beam and also to eliminate clogging of the nozzle 31. The combined gas streams exit the print head through the converging nozzle that compresses the aerosol stream.

The ink can be made from a MOX material with a grain size of 1 to 1000 nm, preferably 1 to 100 nm or even 3 to 20nm in an organic solvent with boiling point between 50 and 400°C, preferable between 100 and 250°C. A surfactant can be added to stabilize the dispersion. The nanoparticles can also be surface functionalized to form a stable ink without the addition of a surfactant.

While there are shown and described presently preferred embodiments of the invention, it is to be understood that the invention is not limited thereto but may be otherwise variously embodied and practised within the scope of the following claims.

## Claims

1. A method for manufacturing gas sensors with a metal oxide layer as sensitive layer comprising the steps of
- providing a substrate and a material for building a sensitive structure including at least one layer of metal oxide and/or an electrode contacting the layer
- contactless dispensing the material onto the substrate through a capillary, wherein the contactless dispensing step includes an additional step of assisting the dispensing step by generating an electrical or a fluid-dynamic force field at a location between the capillary and the substrate.

2. The method of claim 1, wherein the step of assisting the dispensing step by an electrical or a fluid-dynamic force field includes the step of applying a static or changing electric field to droplets of the material , or includes the use of an additional fluid flow surrounding the material during the deposition, respectively.

3. The method of claim 1 or 2, wherein a characteristic length of the structures of the sensitive layer or electrodes is preferably in the range from 30 microns to 10 nm or even in the range of 10 microns to 10 nm.

4. The method of any of the preceding claims, wherein the sensitive structure is built by moving the capillary relative to the substrate before and/or during a deposition process.

5. The method of any of the preceding claims, wherein the sensitive structure is built by depositing spacially separated or at least partly overlapping deposits of the material onto the substrate.

6. The method of any of the preceding claims, wherein the material is a metal oxide for use as metal oxide layer and/or a noble metal for use as electrode material dispersed in fluid material.

7. The method of claim 6, wherein the metal oxide is selected from a group consisting of tin oxide, tungsten oxide, gallium oxide, indium oxide, and zinc oxide mixures thereof in non-intentionally doped and doped form.

8. The method of any of the preceding claims, wherein the capillary is part of a jet printing tool providing additional reservoirs of sensitive and/or electrode material to sustain manufacturing of a large number of sensitive layers and wherein the substrate is a wafer or diced parts of a wafer with the wafer preferably comprising electronic elements in CMOS logic.

9. The method of any of the preceding claims, applied to build a sensitive structure comprising different metal oxide materials and/or different electrode materials.

10. A gas sensor using a metal oxide layer contacted by electrodes wherein the characteristic length of either an electrode or the metal oxide layer or both are in the range from 30 microns to 10 nm.

11. The gas sensor of claim 9, wherein the electrodes and/or layers are preferably composed of spatially separated and/or at least partically overlapping deposits.

12. The gas sensor of claim 9, included into a portable electronic device further comprising a processing unit, a battery unit and communication unit for communicating with a private or public network.
